# EUROPEAN PATENT SPECIFICATION

(11) **EP 0 569 622 B1**
(45) Date of publication and mention of the grant of the patent: **22.02.1995**
(21) Application number: 92203620.7
(22) Date of filing: 23.11.1992
(51) Int. Cl.: G11B 23/00, G11B 33/04, B65D 85/57

(54) **Packaging for a flat data carrier**
Verpackung für flache Aufzeichnungsträger
Emballage pour support de données plat

(43) Date of publication of application: 18.11.1993
(73) Proprietor: VAN DE STEEG B.V., NL-7532 RB Enschede (NL)
(72) Inventor: Smit, Harm Hendrik, NL-7531 LC Enschede (NL)
(74) Representative: Hoijtink, Reinoud

(56) References cited:
- EP-A- 0 252 226
- EP-A- 0 503 171
- US-A- 3 426 960
- US-A- 4 709 812
- US-A- 4 869 364

## Description

The present invention relates to a combination of a packaging and at least one flat data carrier, the packaging comprising:
at least one part for receiving the data carrier, provided with an edge at least partially enclosing the data carrier and with means for releasably retaining the data carrier in a receiving space defined by the edge, and
a flat covering part carrying the receiving part and having at least one fold line allowing it to assume a folded out position in which it allows access to the receiving part and a folded shut position in which it covers the receiving part. Such a combination of a packaging and one or more data carriers is known from e.g. EP-A-0 503 171 or US-A-4 709 812 and is taken into account in the preamble of claims 1 and 4.

The known packaging, which is used for packing compact discs comprises a paperboard blank provided with one or more fold lines, on which one or more compact disc holders are glued. The or each compact disc holder is an injection moulded plastic part, comprising a circular recess in which the compact disc fits and a central upstanding element having pliable tabs for clamping the central hole of the compact disc to the compact disc holder. After inserting the compact disc in the holder, the blank is folded along the fold lines, thus forming a cover for the disc. There is no suggestion that the packaging might be used for anything else but compact discs.

Also, different packagings for diskettes are already known. Diskettes on which no data has yet been recorded are generally packed in series of for instance ten diskettes standing on their sides in simple boxes with removable cover. Conversely, diskettes on which data has already been recorded, such as for instance software or files, are packed per disk or, in the case of large programs, per series lying in plastic boxes of book format, usually together with an instruction manual for the use of the data present thereon. Such a plastic box is described in US-A-4 869 364.

The known box for empty diskettes has the drawback that it occupies a relatively large amount of space and is only suitable for packing comparatively large numbers of diskettes. The diskettes furthermore have hardly any support in this packaging. The known book-like packaging for diskettes with professional software of data files on the other hand, has the drawback of a relatively high cost price and relatively limited possibilities for a commercially attractive design.

Finally, from US-A-4 771 890 a packaging for vertical storage of an optical disc is known, comprising an apparently form-retaining tray having a recess for receiving the disc, the edge of the recess being provided with diagonally opposed fixed tabs for holding the disc in the recess Under one of the tabs a clearance is provided, in which a spring is arranged. The disc is placed in the recess by first placing one edge of the disc in the clearance under the tab and compressing the spring far enough that the opposite edge of the disc may pass the fixed tabs and be pushed into the recess as well. Removing the disc from the recess is performed by reversing these steps. The clearance prevents the edge of the disk, which apparently is also form-retaining from being damaged. One or more trays may be transported in a special container. In order to secure each tray in this container, the container comprises a number of circumferentially spaced flexible molded plastic blades, which act as springs for latching a ridge of the tray fixed. This latching arrangement is only used between the tray and the transport container. There is no suggestion that a similar arrangement might be used for securing the optical disk.

The present invention has for its object to provide the combination of a packaging of the type described above and at least one flat data carrier, which does not suffer from the drawbacks of prior art packagings. In a first embodiment of the invention this is accomplished in that the retaining means comprise tabs which protrude from the edge into the receiving space for forming a snap-in connection with the data carrier, the tabs being resiliently connected to the edge and the data carrier being form-retaining.

A second embodiment of the invention is characterized in that the retaining means comprise tabs which protrude from the edge into the receiving space for forming a snap-in connection with the data carrier, the tabs being form-retaining and the data carrier being flexible.

The invention thus provides a simple and inexpensive diskette packaging which moreover offers the possibility of an attractive design in both folded shut and folded out state as a result of a suitable choice of the form and dimensions of the covering part.

Preferred embodiments of the present invention are described in the dependent claims.

The invention is now elucidated in the light of a number of embodiments wherein reference is made to the annexed drawing in which like components are designated with like reference numerals, and in which:
fig. 1 shows a perspective view of a packaging according to a first embodiment of the invention with a data carrier for packing therein,
fig. 2 is a perspective view of the packaging of fig. 1 with data carrier received therein,
fig. 3 shows a cross-sectional detail view along the line III-III in fig. 2,
fig. 4 shows a partly broken away perspective view of a second embodiment of the packaging according to the invention with two data carriers received therein,
fig. 5 is a cross-sectional detail view along the line V-V in fig. 4,
fig. 6 is a partly broken away perspective view of a third embodiment of the packaging according to the invention with data carrier received therein, and
fig. 7 is a cross-sectional detail view along the line VII-VII in fig. 6.

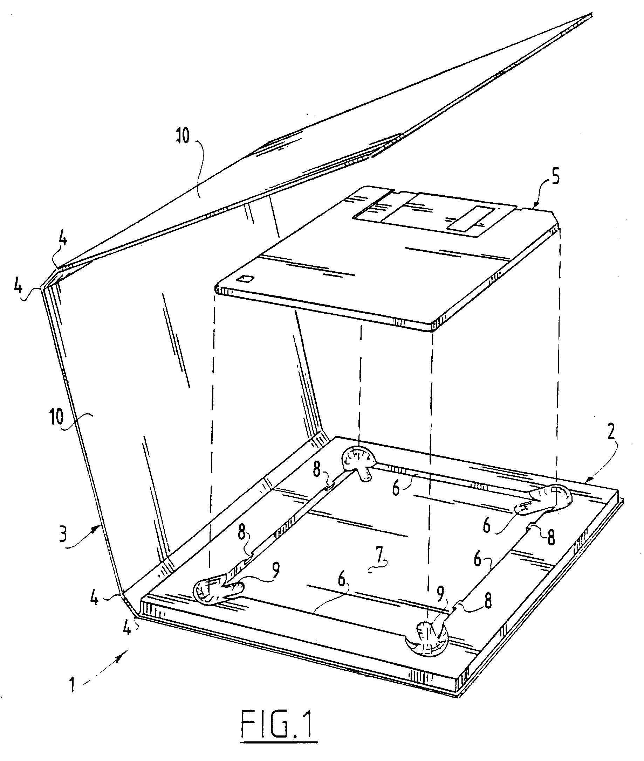

A packaging 1 (fig. 1) for a form-retaining, flats data carrier 5, such as for instance a generally known 3½-inch diskette, comprises a part 2 which receives the diskette 5 and which is attached to a covering part 3. The covering part 3 is cut integrally from a flat starting material, for instance a cardboard plano, and is provided with fold lines 4. The fold lines 4 divide the covering part 3 into a number of flaps 10 onto one of which the receiving part 2 is for instance glued. The remaining flaps 10, the shape and dimensions of which roughly correspond with that of receiving part 2, which in itself protrudes only a little outside the periphery of the data carrier 5, can be printed on their inward facing side with information relating to the use of the data carrier 5 received in packaging 1. The outward facing side of flaps 10 can be printed such that a product results with an attractive appearance.

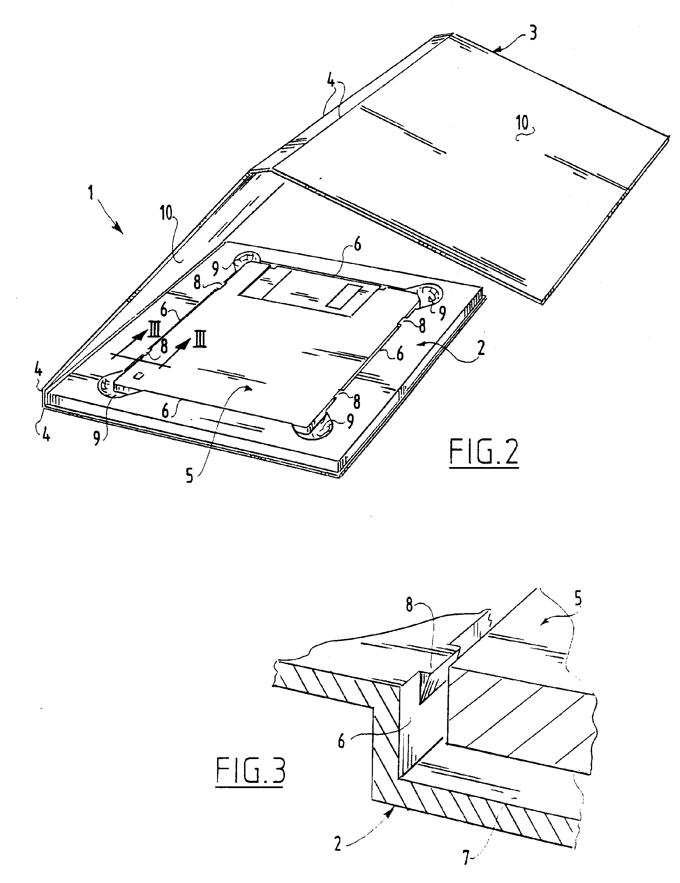

The receiving part 2 is provided with a recessed receiving space 7 which is bounded by an edge 6. The edge 6 encloses the data carrier 5 virtually entirely (fig. 2) and is only interrupted at the corner points by recesses 9 which give access to the diskette 5 so that it can be lifted out of the receiving space 7. For this purpose the recesses 9 are slightly deeper than the receiving space 7 itself. The recesses 9 could of course also be arranged along the sides of receiving space 7 instead of at the corner points. Nor is the number of recesses 9 essential; all that is important is that there is at least a possibility of grasping the data carrier 5. Instead of the recesses 9 the receiving part 2 could also have other means for removing the diskette 5 such as for example a cord or ribbon fastened to the bottom of the receiving space 7 and extending over the edge 6 thereof which is held in position by placing of the diskette 5 in receiving space 7 and whereby diskette 5 can subsequently be lifted up.

The data carrier 5 is releasably retained in the receiving space 7 by means of resilient protrusions 8 (fig. 3) arranged on either side of receiving space 7 and connected to edge 6. These protrusions 8 form a snap-in connection with the form-retaining data carrier 5. When the data carrier 5 is snapped fixedly into the receiving space 7, the flaps 10 of covering part 3 can be folded together along fold lines 4 whereby the receiving space 7 is covered.

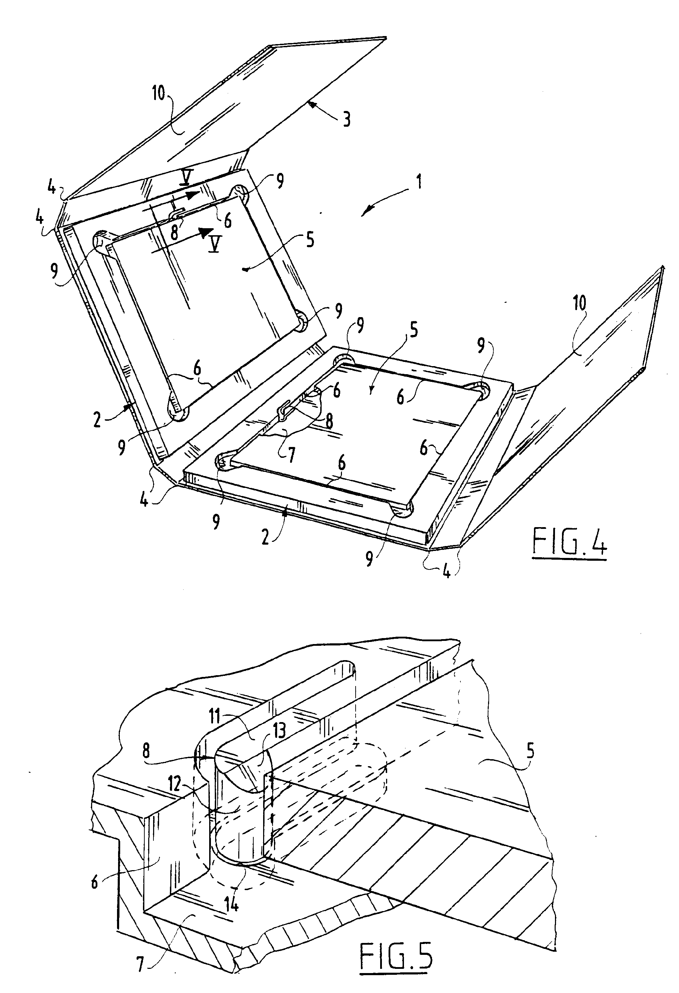

In a second embodiment of the packaging 1 according to the invention (fig. 4), which is likewise suitable for form-retaining data carriers 5, each resilient protrusion 8 takes the form of a flexible arm 11 having an end portion 12 protruding into the receiving space 7 (fig. 5). The end portion 12 is provided with a chamfered surface 13 which simplifies introduction of the data carrier 5. Present in the bottom of the receiving space 7 and under the arm 11 and protrusion 12 is an opening 14 with a shape corresponding therewith so that arm 11 can be pressed slightly downward during placing of the diskette 5. Each receiving space 7 has only one such protrusion 8.

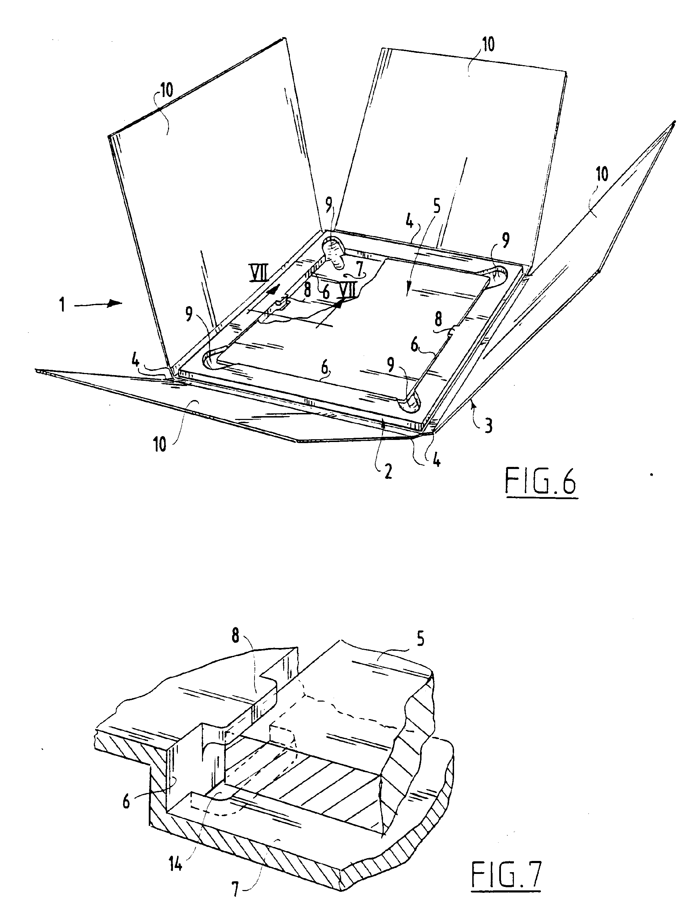

In a third embodiment of the packaging 1 according to the invention (fig. 6) the means 8 for releasably retaining the data carrier 5 in receiving space 7 are formed by two protrusions protruding inside the edge 6 of receiving space 7. Once again a recess 14 is arranged in receiving space 7 beneath the protrusions 8 (fig. 7). In this embodiment the covering part 3 is cruciform and therefore has flaps 10 on all sides round the receiving part 2.

The receiving parts 2 shown are (can be made) also suitable for use in combination with flexible data carriers 5 such as for instance the known 5¼-inch diskette (wherein the dimensions of receiving part 2 and covering part 3 then of course have to be adapted to those of the data carrier 5). The protrusions 8 will in that case be form-retaining instead of resilient in order to form a snap-in connection with the flexible data carrier 5.

In addition to the shown configurations of the covering part 3 a large number of other forms is possible, depending on the objective of the packaging 1 but irrespective of the form of the data carrier 5 for packing. Conceivable here are for instance T-shaped or L-shaped covering parts 3. The flaps 10 may also assume other shapes than the rectangular form shown here.

Different plastics are very suitable as material for the part 2 receiving the data carrier 5. The receiving part 2 can then be manufactured for instance by injection moulding or vacuum-forming. The receiving part 2 may however also be produced from other material. Envisaged here is thin metal or cardboard.

The packaging 1 can in turn be packed in a conventional closable box made from one piece. The covering part 3 can also be provided at the position of the receiving part 2 with standing walls extending therearound, while the flap 10 to be folded in last can also have standing walls falling round the receiving part 2, whereby a box-like packaging 1 is likewise formed.

Although the invention is described above in relation to the packing of diskettes, it will be apparent that the shown packagings are (can be made) equally suitable for other flat data carriers such as (micro)tape cassettes, chip cards and the like.

## Claims

1. Combination of a packaging (1) and at least one flat data carrier (5), the packaging (1) comprising:
at least one part (2) for receiving the data carrier (5), provided with an edge (6) at least partially enclosing the data carrier (5) and with means (8) for releasably retaining the data carrier (5) in a receiving space (7) defined by the edge (6), and
a flat covering part (3) carrying the receiving part (2) and having at least one fold line (4) allowing it to assume an unfolded state in which it allows access to the receiving part (2) and a folded state in which it covers the receiving part (2), **characterized in that** the retaining means (8) comprise tabs which protrude from the edge (6) into the receiving space (7) for forming a snap-in connection with the data carrier (5), the tabs being resiliently connected to the edge (6) and the data carrier (5) being form-retaining.

2. Combination as claimed in claim 1, **characterized in that** each resilient tab (8) comprises a flexible arm (11), having an end portion (12) protruding into the receiving space (7).

3. Combination as claimed in claim 1 or 2, **characterized in that** the data carrier (5) is a standard 3½-inch diskette.

4. Combination of a packaging (1) and at least one flat data carrier (5), the packaging (1) comprising:
at least one part (2) for receiving the data carrier (5), provided with an edge (6) at least partially enclosing the data carrier (5) and with means (8) for releasably retaining the data carrier (5) in a receiving space (7) defined by the edge (6), and
a flat covering part (3) carrying the receiving part (2) and having at least one fold line (4) allowing it to assume an unfolded state in which it allows access to the receiving part (2) and a folded state in which it covers the receiving part (2), **characterized in that** the retaining means (8) comprise tabs which protrude from the edge (6) into the receiving space (7) for forming a snap-in connection with the data carrier (5), the tabs being form-retaining and the data carrier (5) being flexible.

5. Combination as claimed in claim 4, **characterized in that** the data carrier (5) is a standard 5¼-inch diskette.

6. Combination as claimed in any one of the preceding claims, **characterized in that** the covering part (3) is manufactured from cardboard.

7. Combination as claimed in any one of the preceding claims, **characterized in that** the receiving part (2) is manufactured from a plastics material.

8. Combination as claimed in any one of the preceding claims, **characterized in that** the covering part (3) is printed with information relating to the use of the data carrier (5) received in the packaging.

## Patentansprüche

1. Kombination von einer Verpackung (1) und von wenigstens einem flachen Datenträger (5), wobei die Verpackung (1) die folgenden Teile umfaßt:
wenigstens einen Teil (2), der den Datenträger (5) aufnimmt und mit einem Rand (6) versehen ist, der wenigstens teilweise den Datenträger (5) umschließt und der außerdem Mittel (8) aufweist, um den Datenträger (5) in einem Aufnahmeraum (7), der von dem Rand (6) definiert wird, aufzunehmen und
einen flachen Abdeckteil (3), der den Aufnahmeteil (2) trägt und wenigstens eine Faltlinie (4) aufweist, die die Möglichkeit schafft, daß der Abdeckteil in einen zurückgefalteten Zustand übergeht, in dem der Aufnahmeteil (2) zugänglich ist, während der Abdeckteil in Faltstellung den Aufnahmeteil (2) bedeckt,
dadurch gekennzeichnet, daß die Haltemittel (8) aus Vorsprüngen bestehen, die vom Rand (6) in den Aufnahmeraum (7) vorstehen, um eine Einschnappverbindung mit dem Datenträger (5) zu bilden, wobei die Vorsprünge elastisch mit dem Rand (6) verbunden sind und der Datenträger (5) formsteif ausgebildet ist.

2. Kombination nach Anspruch 1,
dadurch gekennzeichnet, daß jeder elastische Formvorsprung (8) aus einem flexiblen Arm (11) besteht, dessen Endabschnitt (12) in den Aufnahmeraum (7) vorsteht.

3. Kombination nach den Ansprüchen 1 oder 2,
dadurch gekennzeichnet, daß der Datenträger (5) eine genormte 3½-Zoll-Diskette ist.

4. Kombination von einer Verpackung (1) und wenigstens einem flachen Datenträger (5), wobei die Verpackung (1) die folgenden Teile aufweist:
wenigstens einen Teil (2) zur Aufnahme des Datenträgers (5), der mit einem Rand (6) versehen ist, welcher wenigstens teilweise den Datenträger (5) umschließt und Mittel aufweist, um elastisch den Datenträger im Aufnahmeraum (7) zu halten, der durch den Rand (6) definiert ist und
einen flachen Abdeckteil (3), der den Aufnahmeraum (2) abdeckt und wenigstens eine Faltlinie (4) besitzt, welche die Möglichkeit schafft, den Abdeckteil zurückzufalten, und in dieser Stellung ist ein Zugriff in den Aufnahmeteil (2) möglich, wobei der Abdeckteil in eine Faltstellung überführt werden kann, in der er den Abdeckteil (2) überdeckt,
dadurch gekennzeichnet, daß die Haltemittel (8) aus Vorsprüngen bestehen, die vom Rand (6) in den Aufnahmeraum (7) vorstehen, um eine Einschnappverbindung mit dem Datenträger (5) zu bilden, wobei die Vorsprünge formsteif ausgebildet sind, während der Datenträger (5) flexibel ist.

5. Kombination nach Anspruch 4,
dadurch gekennzeichnet, daß der Datenträger (5) eine genormte 5¼-Zoll-Diskette ist.

6. Kombination nach einem der vorhergehenden Ansprüche, dadurch gekennzeichnet, daß der Abdeckteil (3) aus Karton besteht.

7. Kombination nach einem der vorhergehenden Ansprüche, dadurch gekennzeichnet, daß der Aufnahmeteil (2) aus Plastikmaterial hergestellt ist.

8. Kombination nach einem der vorhergehenden Ansprüche, dadurch gekennzeichnet, daß der Abdeckteil (3) mit Informationen bedruckt ist, die sich auf die Benutzung des Datenträgers (5) beziehen, der von der Verpackung aufgenommen wird.

## Revendications

1. Combinaison d'un emballage (1) et d'au moins un support de données plat (5), l'emballage (1) comportant :
au moins une partie (2) destinée à recevoir le support de données (5), munie d'un bord (6) entourant au moins partiellement le support de données (5) et munie de moyens (8) destinés à retenir de manière libérable le support de données (5) dans un espace de réception (7) défini par le bord (6), et
une partie recouvrante plate (3) fermant la partie de réception (2) et ayant au moins une première ligne de pliage (4) permettant à celle-ci de prendre un état non plié dans lequel elle permet l'accès à la partie de réception (2) et un état plié dans lequel elle recouvre la partie de réception (2) caractérisée en ce que les moyens de retenue (8) comportent des pattes qui font saillie à partir du bord (6) dans l'espace de réception (7) pour former une liaison par encliquetage avec le support de données (5), les pattes étant reliées de manière élastique au bord (6) et le support de données (5) gardant sa forme.

2. Combinaison selon la revendication 1, caractérisée en ce que chaque patte élastique (8) est constitué d'un bras flexible (11), ayant une partie formant extrémité (12) faisant saillie dans l'espace de réception (7).

3. Combinaison selon la revendication 1 ou 2, caractérisée en ce que le support de données (5) est une disquette standard de 3½ pouces.

4. Combinaison d'un emballage (1) et d'au moins un support de données plat (5), l'emballage (1) comportant :
au moins une partie (2) destinée à recevoir le support de données (5), munie d'un bord (6) entourant au moins partiellement le support de données (5) et munie de moyens (8) destinés à retenir de manière libérable le support de données (5) dans un espace de réception (7) défini par le bord (6), et
une partie recouvrante plate (3) fermant la partie de réception (2) et ayant au moins une première ligne de pliage (4) permettant à celle-ci de prendre un état non plié dans lequel elle permet l'accès à la partie de réception (2) et un état plié dans lequel elle recouvre la partie de réception (2) caractérisée en ce que les moyens de retenue (8) comportent des pattes qui font saillie à partir du bord (6) dans l'espace de réception (7) pour former une liaison par encliquetage avec le support de données (5), les pattes gardant leur forme et le support de données (5) étant flexible.

5. Combinaison selon la revendication 4, caractérisée en ce que le support de données (5) est une disquette standard de 5¼ pouces.

6. Combinaison selon l'une quelconque des revendications précédentes, caractérisée en ce que la partie recouvrante (3) est réalisée à partir de carton.

7. Combinaison selon l'une quelconque des revendications précédentes, caractérisée en ce que la partie de réception (2) est réalisée à partir d'une matière plastique.

8. Combinaison selon l'une quelconque des revendications précédentes, caractérisée en ce la partie recouvrante (3) est imprimée d'informations concernant l'utilisation du support de données (5) reçu dans l'emballage.
